# EUROPEAN PATENT APPLICATION

(11) **EP 4 668 528 A1**
(43) Date of publication of application: **24.12.2025**
(21) Application number: 24183507.3
(22) Date of filing: 20.06.2024
(51) Int. Cl.: H02J 3/38, H02J 3/46, H02M 7/493

(54) **PARALLEL INVERTER NETWORK MANAGEMENT SYSTEM**

(71) Applicant: Eorta NV, 9940 Evergem (BE)
(72) Inventor: DE CLERCQ, John, 9340 Lede (BE); ROMEYNS, Dirk, 9630 Zwalm (BE)
(74) Representative: De Clercq & Partners

(57) **Abstract**

The present invention relates to the field of renewable energy systems, specifically to islanding inverters used for higher power or current applications suitable for electrical grids or standalone power systems. The invention addresses the challenges associated with connecting multiple islanding or grid inverters in parallel, providing a method and system for coordinated control and equal current distribution among the inverters to enhance overall stability and efficiency.

An aspect of the present invention relates to a system comprising a plurality of inverter modules connected to a master module that monitors each inverter module's output current(s) and subsequently instructs each inverter module to adjust its output current(s) value to match a target current value, resulting in similar output current(s) from each inverter module. This configuration allows any number of inverter modules to be controlled by a single master module, ensuring that the paralleled modules deliver approximately similar output currents.

## Description

### FIELD OF THE INVENTION

The present invention relates to the field of renewable energy systems, specifically to islanding inverters used for higher power or current applications suitable for electrical grids or standalone power systems. The invention addresses the challenges associated with connecting multiple islanding or grid inverters in parallel, providing a method and system for coordinated control and equal current distribution among the inverters to enhance overall stability and efficiency.

### BACKGROUND

Electrical energy networks often utilize inverters to convert direct current (DC) generated by renewable energy sources, such as solar panels or wind turbines, into alternating current (AC) suitable for use in electrical grids or standalone power systems. An inverter typically comprises two main components: an inverter stage that converts DC to AC, and a filter that improves the quality of the AC output. This setup ensures that the electricity generated is compatible with standard grid specifications and suitable for consumption by the end user.

A common approach to increase the power or output current(s) in these energy networks is by connecting a plurality of inverters in parallel. Such a parallel inverter system can be used in sustainable energy applications and setups, where the energy provided by a single energy source can be insufficient to meet the demands for higher power or current applications. When a load is connected to the parallel inverter system, each inverter may act as an independent voltage source, striving to regulate the system's output voltage to meet the load's power demand.

However, this independence can lead to an unequal distribution of current(s) across the parallel inverters. Due to the individual voltage control efforts of each inverter, discrepancies arise, leading to unequal current sharing. This imbalance can cause significant issues, such as excessive DC currents flowing between inverters due to slight voltage differences and the low resistance of the filter circuits. Additionally, mismatched voltages can result in transient AC currents and other irregular current flows that further complicate the system's stability and efficiency. Consequently, the coordination of these decentralized inverters becomes problematic, resulting in instability and potential conflicts in voltage regulation.

Although the use of a centralized control unit can be considered, this approach necessitates a very high-speed communication network directly connecting the individual inverters to the control unit. Such a requirement introduces significant delays, as the control unit must continuously (in real time) monitor the outputs of each inverter and adjust local operations to ensure that all inverters are synchronised, sharing the load equally and maintaining the stability of the power output. Any delay in receiving and processing data by the control unit propagates the aforementioned problems. This issue is particularly relevant for isolated (island) energy systems where the power source operates autonomously, detached from the primary grid, and relies primarily on renewable energy sources that are known to fluctuate based on environmental conditions.

There is a need for a technical solution that addresses the problems associated with independent voltage regulation and unequal current sharing when connecting a plurality of inverters in parallel. Advantageously, the solution can be implemented in a cost-effective manner without relying on an expensive high-speed communication network and high-throughput control unit.

### SUMMARY OF THE INVENTION

It is an objective of the present invention to address the limitations of the current state of the art by providing a system for the coordinated control and equal current distribution in an energy network formed by connecting a plurality of inverter modules in parallel.

Coordinating each inverter module in such a shared energy network typically requires fast communications to handle varying energy demands. To avoid potential delays and instability, each inverter module locally controls its output current(s) and voltage, collectively forming a voltage source for the islanding grid (thereby forming an 'artificial' grid). Since individual inverter voltage sources are paralleled, each inverter's output current(s) is dependent on internal measurement and component tolerances, which can lead to significant differences in output currents between inverters.

The present invention proposes a solution for equalizing output currents among multiple inverter modules by including a master module that monitors each inverter module's output current(s) and subsequently instructs each inverter module to adjust its output current(s) value to match a target current value, resulting in similar output currents from each inverter module. This configuration allows any number of inverter modules to be controlled by a single master module, ensuring that the paralleled modules deliver approximately similar output currents.

The advantages of the present invention include improved stability and reliability of the parallel inverter energy networks. By ensuring equal current distribution, the system can minimize the chances of transient AC currents and other irregularities that can disrupt power quality. Additionally, the invention allows for seamless operation even when individual inverters have different capabilities, as the target currents can be determined based on each inverter's output capacity. This flexibility ensures optimal performance and longevity of the energy network, which is particularly valuable for isolated (island) energy systems where the power source operates autonomously, detached from the primary grid, and/or relies primarily on renewable energy sources. Additionally, even if one or more inverter modules encounter issues during operation, the remaining inverter modules can quickly take over a portion of the load previously handled by the malfunctioning inverter module(s), thereby enhancing the system's resilience.

Furthermore, the proposed invention can be implemented in a cost-efficient manner without relying on an expensive high-speed communication network and high-throughput control unit. In this way, the invention can better support scalability and adaptability in various renewable energy applications. For example, the method can be applied to islanding inverters, grid inverters, and combined islanding-grid inverters, making it suitable for diverse setups. This makes the solution accessible for widespread adoption in enhancing the power output and stability of renewable energy systems.

The below summary is provided to introduce a selection of key embodiments of the invention in a simplified form. These embodiments are described in further detail in the detailed description of the disclosure below. This summary is not intended to identify key features or essential features of the claimed subject matter, nor is it intended to be used to limit the scope of the claimed subject matter.

An aspect of the present invention relates to a parallel inverter network management system, comprising:
- a plurality of inverter modules electrically connected in parallel through a power distribution network configured for transfer of electrical energy to at least one load connected to the power distribution network;
- a master module communicatively connected to the plurality of inverter modules;
- wherein each inverter module of the plurality of inverter modules is electrically connected to at least one direct current source supplying a direct current, and the inverter module is configured to invert the supplied direct current into an alternating current(s), thereby forming an alternating current source supplying an alternating current(s) to the power distribution network;
- wherein each inverter module is configured for locally adjusting its output current(s) supplied to the power distribution network;
- wherein each inverter module is configured to measure its output current(s) and communicate the measured output current(s) to the master module;
- wherein the master module is configured to, upon receiving the plurality of measured output currents from the plurality of inverter modules, determine a target current value across the plurality of inverter modules, and transmit the target current value to the plurality of inverter modules; and,
- wherein each inverter module is configured to, upon receiving the target current value from the master module, adjust its output current(s) to match the target current value.

Another aspect of the present invention relates to a method for managing a parallel inverter network, comprising the steps of:
- providing a modular energy management system comprising a plurality of inverter modules electrically connected in parallel through a power distribution network configured for transfer of electrical energy to at least one load connected to the power distribution network, and a master module communicatively connected to a plurality of inverter modules; wherein each inverter module of the plurality of inverter modules is electrically connected to at least one direct current source supplying a direct current, and the inverter module is configured to invert the supplied direct current into an alternating current(s), thereby forming an alternating current source;
- measuring, by each inverter module, its output current(s) and communicating the measured output current(s) to the master module;
- determining, by the master module, upon receiving the measured output currents from the plurality of inverter modules, a target current value across the plurality of inverter modules, and transmitting the target current value to the plurality of inverter modules;
- adjusting, by each inverter module, upon receiving the target current value from the master module, its output current(s) to match the target current value.

In some embodiments, the master module is configured to determine the target current value by calculating an average output current(s) per inverter module, preferably by determining the root mean square (RMS), from the measured output currents received from the plurality of inverter modules.

In some embodiments, each inverter module is configured to determine an internal calibration value defined as the difference between the target current value and its output current(s), and adjust its output current(s) to match the target current value based on the internal calibration value.

In some embodiments, the plurality of inverter modules are communicatively connected and configured to communicate the measured output current(s).

In some embodiments the plurality of inverter modules are further configured to reduce direct output current(s) by summing the phase currents generated by each inverter module and adjusting them to collectively equal zero.

In some embodiments, each inverter module comprises an inverter stage configured to convert direct current to alternating current, and a filter configured to adjust the alternating output current(s). The plurality of inverter modules are electrically coupled by connecting the filters of each inverter module.

In some embodiments each inverter module is configured to measure its output voltage and communicate the measured output voltage to the plurality of inverter modules; and each inverter module is further configured to, upon receiving one or more measured output voltages from the other inverter modules, compare its measured voltage with the received voltage measurements, and optionally adjust its internal voltage measurement calibration based on the comparison.

In some embodiments, each inverter module is further configured to measure the voltage of the direct current supplied from the direct current source and adjust its output current(s) to optimize the inversion process.

In some embodiments, each inverter module further comprises a voltage sensor configured for measuring the voltage(s) of the alternating current(s) flowing to the power distribution network.

In some embodiments, each inverter module further comprises a voltage controller configured for adjusting the inverter modules output voltage(s) to match a target output voltage.

In some embodiments each inverter modules comprises or is configured as single-phase inverters, two-phase inverters, three-phase inverters, and/or three-phase plus neutral inverters.

In some embodiments, the system further comprises a communication interface comprising communicative pathways configured for data exchange between the master module and the plurality of inverter modules.

In some embodiments the communication interface between the master module and the plurality of local modules is a low-speed communication interface configured to operate at data transfer rates sufficient for transmitting the target current value, without requiring high-speed data transmission capabilities;

In some embodiments the low-speed communication interface operates at data transfer rates ranging up to 10 megabits per second (Mbps), for example 5 Mbps or 1 Mbps, preferably up to 125 kilobits per second (kbps).

In some embodiments, the electrical energy source comprises one or more photovoltaic systems, wind turbines, fuel cells, batteries, generators, and/or combined heat and power units.

In some embodiments, the load comprises one or more residential appliances, commercial appliances, industrial appliances, electric vehicles, heating and cooling systems, and/or public electricity grid connections.

### DESCRIPTION OF THE FIGURES

The following description of the figures relate to specific embodiments of the disclosure which are merely exemplary in nature and not intended to limit the present teachings, their application or uses.
**Figure 1** shows a block chart illustrating an exemplary parallel inverter energy network 100 in accordance with aspects of the present invention.
**Figure 2** shows a block chart illustrating a modular energy network 200 in accordance with aspects of the present invention.
**Figure 3** schematically shows an inverter module 300 in accordance with aspects of the present invention.
**Figure 4** schematically shows the parallel connection between a plurality of inverter modules 300 in accordance with aspects of the present invention.
**Figure 5** schematically shows a communication interface communicatively connecting a master module communicatively connected to a plurality of inverter modules in accordance with aspects of the present invention.

### DETAILED DESCRIPTION

Specific embodiments in accordance with various aspects of the technology of the present disclosure will be described in more detail below. When describing embodiments, reference is made to the accompanying drawings, which are provided solely to aid in the understanding of the described embodiment. It will be readily understood that the aspects of the present disclosure, as generally described herein, and illustrated in the figures, can be arranged, substituted, combined, and designed in a wide variety of different configurations, all of which are explicitly contemplated and make part of this disclosure.

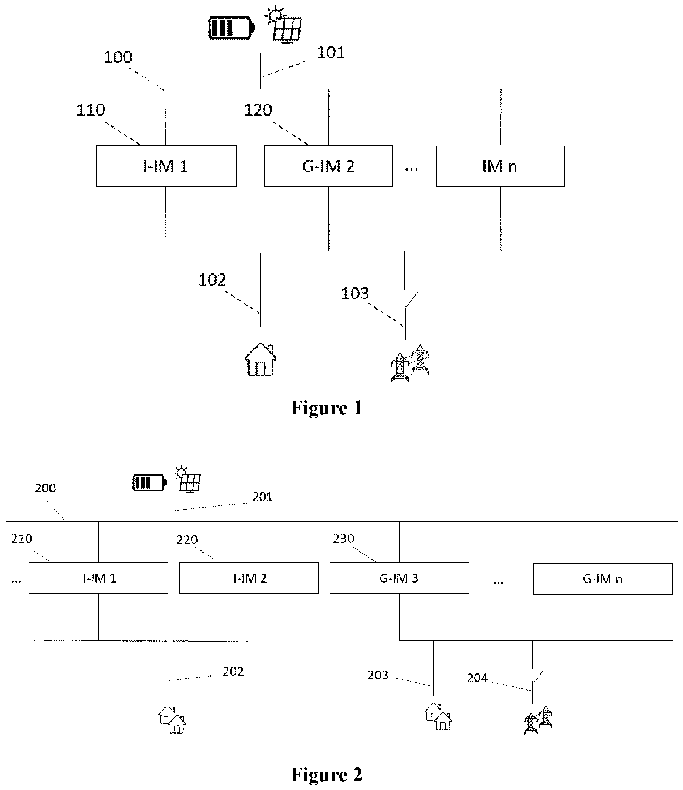

**Figure 1** is a block chart schematically illustrating an exemplary parallel inverter energy network 100 formed by connecting a plurality of inverter modules 101 in parallel. The inverter modules 101 connect at least one energy source 202, as illustrated on one side of the network 100, to one or more loads and appliances 202, such as a residential appliances, commercial appliances, industrial appliances, and/or an external electricity infrastructure 203, such as the public electricity grid, which are illustrated on the opposite side of the network 10.

As used herein, a "parallel inverter energy network" refers to an electrical network formed by connecting a plurality of inverter modules as later described in parallel to increase the network's potential power or output current(s). It should be understood that this energy network is distinct from the "electricity grid" as defined below, which refers to the electrical network that connects the energy network or other facility to the larger public electricity infrastructure. This connection enables the distribution and exchange of electrical power between the parallel inverter energy network and the primary utility grid for consumption or potential injection of surplus energy generated by the energy sources.

As used herein, an "energy load" refers to any apparatus, device, system, or component connected to the described energy network that consumes electrical energy. Examples may include, but are not limited to, residential, commercial, or industrial appliances, electric vehicles, heating and cooling systems, lighting systems, and any other electrical apparatus that requires electrical energy to perform its intended function. Additionally, the load may include a battery. A load may have varying energy consumption patterns and may also be capable of switching between active (consuming energy) and inactive (cutoff) states as controlled by the inverter module it's connected to or its own control unit.

As used herein, an "energy source" refers to any apparatus, device, system, or component connected to the described energy network that generates, produces, or supplies electrical energy as direct current (DC). Examples may include, but are not limited to, renewable energy sources such as photovoltaic (PV) systems, wind turbines, fuel cells, as well as conventional sources such as generators, electricity grid connections, and combined heat and power (CHP) units. Additionally, the energy source may include a battery. A source may deliver energy through the described energy network to various appliances representing energy loads or supply energy to the electricity grid, and it may have the capability to switch between active (supplying energy) and inactive (cutoff) states as controlled by the inverter module it's connected to or its own control unit.

As used herein, a "battery" refers to an energy storage device within the modular energy management system that is configured for storing electrical energy and releasing it when requested. Accordingly, the battery can operate in two primary modes: charging mode, where it acts as an energy load by receiving and storing energy, and discharging mode, where it acts as an energy source by supplying stored energy to other components or systems. The battery may be a fixed battery, permanently connected to the system, or a removable battery, capable of connecting to and disconnecting from the system, such as a car battery. The battery can be composed of various technologies, such as lithium-ion, lead-acid, or solid-state cells, and is managed by the system to optimize energy storage and distribution, enhance efficiency, and ensure a stable supply of power to connected loads and modules.

Returning to **Figure 1****,** the parallel inverter energy network 100 in the exemplary embodiment is shown to comprise at least one first island inverter module ('I-IM') 110 configured to create an 'artificial' islanding grid connecting 102 to a load and at least one grid inverter module ('G-IM') 120 connecting 103 to the electricity grid, as described herein. The one island inverter module 110 and grid inverter module receive 101 DC as input from one or more energy sources. It should be appreciated that the invention described herein is applicable to various combinations of islanding inverters and/or grid inverters ('IM n'), as described below.

In certain embodiments, the parallel inverter energy network may comprise a plurality of parallel island inverter modules. Since the island inverter modules essentially function as voltage sources, they can generate an artificial grid, with loads on the islanding grid drawing a certain current from the voltage sources. Rapid load variations necessitate swift responses from the current and voltage controllers within the inverter modules.

In other embodiments, the parallel inverter energy network may comprise a plurality of parallel grid inverter modules. As the electricity grid generally serves as both a voltage source and a load, a grid inverter module can inject current into the grid, such as photovoltaic or battery energy. Paralleling grid inverter modules entails paralleling current sources, allowing multiple inverter modules to be connected in parallel to the grid.

Additionally, the parallel inverter energy network may comprise at least one island inverter module and at least one grid inverter module in parallel. This combination provides additional flexibility for use in sustainable energy applications and setups, which is common in modern residential and industrial environments. The capabilities of renewable energy sources can be insufficient to meet energy demand at certain times of the day and can result in overproduction at other times, thereby necessitating the presence of an electricity grid connection.

**Figure 2** illustrates a modular energy network 200 comprising a plurality of parallel inverter network management systems as described herein, each including a plurality of island inverter modules ('I-IM') 210, 220 and/or grid inverter modules ('G-IM') 230, essentially forming 'branching' networks that can be electrically connected 202, 203 to one or more loads and optionally connected 204 to the electricity grid as described herein. Within this modular energy network, various energy sources and loads can be interconnected 201 via the one or more branching power distribution networks.

Optionally, each system may include a connection hub facilitating safe connectivity between the plurality of branching systems through various hardware components such as terminals, connectors, protective devices (e.g., fuses and residual current detectors), and switching devices. This branching setup enhances system flexibility to address specific user needs and environments.

In this way, the modular energy network can facilitate the establishment of an extensive network with increased power capacity and extended reach, enabling the distribution of various energy sources to diverse loads across a plurality of households or workplace offices for example. Another benefit is the ability to deploy each modular of the modular energy network at distinct locations, potentially nearer to energy sources or loads. This branching arrangement can enhance system flexibility, catering to the specific requirements and environments of users.

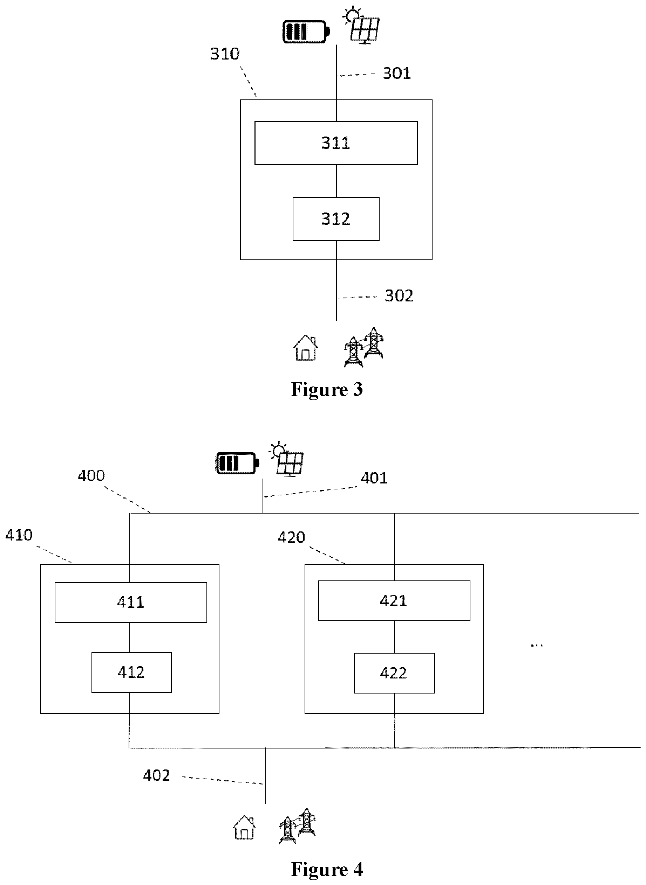

**Figure 3** schematically depicts an inverter module 310 in accordance with aspects of the present invention. The shown inverter module 310 comprises an inverter stage 311, responsible for DC to AC conversion, and a filter 312, enhancing AC output quality to meet standard network specifications and end-user requirements. In certain embodiments, the filter may include inductors and capacitors with low ohmic values and specific inductance. The DC input 301 can receive DC from various energy sources and the AC output 302 can connect to various energy loads and/or the electricity grid, with the inverter module 310 featuring a controller configured to control one or more AC output parameter(s) such as current(s) and/or voltage(s).

In certain embodiments, the inverter module may comprise a current sensor configured for measuring an output AC current and/or a voltage sensor configured for measuring an output AC current. Alternatively or in combination, the filter of the inverter module may be configured for measuring the output parameters, such as the current and/or voltage after inversion.

**Figure 4** illustrates the parallel connection of a plurality of inverter modules 410, 420 forming the parallel inverter energy network 400, as defined herein. Each inverter module comprises 410, 420 an inverter stage 411, 421 and a filter 412, 422 as defined herein. These inverter modules 410, 420 can be linked together through their filters 412, 422 described previously. Each inverter module410, 420 is configured to regulate its output AC(s) and/or voltage(s) within a predetermined tolerance, which can be determined based on various mechanical characteristics related to the filters. The inverter modules 410, 420 can jointly receive 401 DC(s) from various energy sources and supply 402 AC(s) to various energy loads and/or the electricity grid. The AC output(s) can connect to energy loads and/or the electricity grid, with the inverter module featuring a current controller configured to control output parameters such as current(s) and/or voltage(s).

Voltage measurement tolerances and tolerances in electronic components across various output phases can induce currents between the modules, comprising components such as DC and AC currents caused by voltage differences and output impedances. To achieve uniform current distribution among the parallel inverter modules, a real-time calibration approach can be employed, where the phase currents are adjusted to primarily collectively sum to zero and secondly output the same currents on each inverter module, effectively eliminating any DC output current(s). This calibration method may ensure precise current distribution, enhancing system stability and performance with minimal communication overhead.

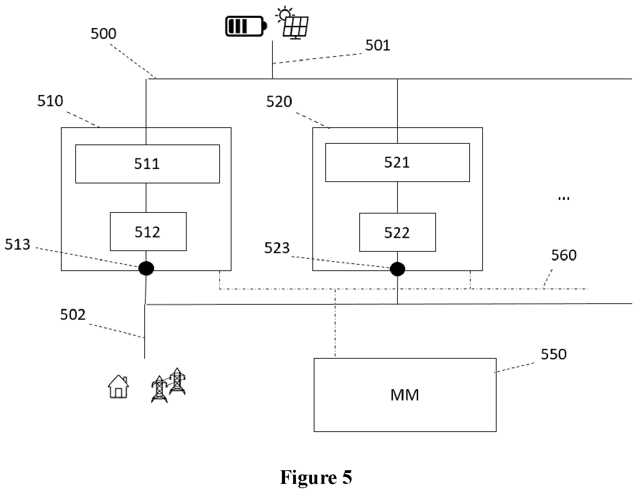

**Figure 5** schematically shows the herein described parallel inverter energy network 500 further comprising a master module 550 communicatively linked to the plurality of local modules 510, 520. These inverter modules 510, 520 receive 501 input DC current(s) from one or more energy source(s) as defined herein. After DC to AC conversion through the previously described inverters stages 511, 521 and filters 512, 522, the inverter modules 510, 520 may measure one or more local output parameter(s), such as AC(s) output and/or AC voltage(s), and transmit this data over a communication interface 560 to the master module 550. The master module 550 processes this received data to determine a target output current, subsequently communicated back to the inverter modules 510, 520 via the communication interface 560. Upon receiving the target output current, each inverter module 510, 520 can adjust its output current(s) 513, 523 to collectively align with the specified target output current(s) and form a supply connected 502 towards the load(s) and/or grid.

In certain embodiments the master module can be connected to the plurality of inverter modules through a communication interface, comprising communicative pathways configured for data exchange between the master module and the inverter modules, as well as possible data exchange between the inverter modules themselves. These communicative pathways can provide connection for transmitting control signals, performance profiles, and/or sensor measurements among the inverter modules. In this way, the master module can relay commands and receive feedback from each inverter module, facilitating real-time adjustments and optimization of the system's energy distribution strategy as described later. In certain embodiments, the communication interface may utilize wired or wireless communication protocols supporting fast data transfer to maintain system performance and responsiveness. Wired communication protocols may be preferred for improved reliability and speed.

In certain embodiments, each inverter module can be configured to determine an internal calibration value defined as the difference between the target current value and its output current(s). In this manner, each inverter module is capable of autonomously adjusting its output current(s) to correspond to the target current value based on the internal calibration value, thereby enhancing response time and decentralizing control, thus reducing dependency on specific instructions from the master module. Additionally, the inverter modules may be communicatively connected to each other in order to communicate any changes in their output current(s), thereby adjusting the target current value without relying on further instructions from the master module.

In certain embodiments each inverter module can be configured to measure its output voltage(s) and communicate the measured output voltage to the plurality of inverter modules. Upon receiving one or more measured output voltage(s) from the other inverter modules, each inverter module can then compare its measured voltage(s) with the received voltage measurements, and optionally adjust its internal calibration value based on the comparison if discrepancies are detected. With consistent voltage readings, the inverter modules can more accurately measure their output currents. Each inverter module determines the internal calibration value as the difference between the target current value (received from the master module) and its output current(s). The modules can use the calibrated voltage readings to fine-tune their output currents, ensuring they collectively match the target current value.

In certain embodiments, the control module can determine the target output by determining a root mean square (RMS) value. Within the context of the present invention, the "Root Mean Square" refers to a statistical measure utilized in electrical engineering to express the effective value of AC waveforms. It represents the equivalent DC value that would produce the same amount of heat in a resistive load as the AC waveform. The skilled person is understood to know how implement an automated calculation of the RMS based on the characteristics of the network.

Accordingly, the master module can send out the average current value to each connected inverter module. Afterwards, each inverter module can be configured to determine an internal calibration value defined as the difference between the average current value and its output current(s) so that the inverter is following the average current value sent out by the master modules. Additionally, the inverter modules may be communicatively connected to each other in order to communicate any changes in their output current(s), thereby adjusting the average current value without relying on further instructions from the master module.

In certain embodiments, the master module is configured to calculate the averages of the output current(s), preferably through the RMS value, and transmit them to each inverter module. Following this, individual modules can make internal corrections. Moreover, in certain embodiments, the setpoint of the current controller can be modified based on the correction factor derived from the average value calculated by the controller module. This adjustment ensures that the setpoint aligns the inverters' output currents with the averaged values determined by the control modules.

In certain embodiments, the inverter modules can be configured to adjust their output current(s) and/or voltage(s) by summing their phase currents. This adjustment ensures that the sum of the phase currents equals zero, effectively eliminating any DC output current(s). Consequently, there will be no DC current flowing towards other paralleled inverters. By implementing this configuration, real-time calibration can be achieved in each of the paralleled inverter modules, resulting in a highly uniform distribution of inverter currents within acceptable tolerances.

In certain embodiments, the measured output voltage value(s) of each inverter module can be used as feedback tor the purpose of calibrating the voltage measurements within each inverter module. Each inverter module can measure its own output voltage(s) using integrated voltage sensors for example. The measured output voltage values can then be transmitted to all other inverter modules within the network via the communication interface described herein. Each inverter module receives voltage measurements from the other modules and compares their own measured voltage(s) with the received values to identify any discrepancies. Based on the comparison, each inverter module can adjust its internal voltage measurement calibration to align with the received measurements, ensuring consistency across the network. In this way, all inverter modules can maintain accurate and consistent voltage measurements, which is crucial for balanced power distribution and optimal system performance. Advantageously, the output voltage value(s) can be continuously monitored such that potential voltage discrepancies do not lead to imbalanced power distribution or inefficiencies.

In various embodiments, the inverter modules can be configured as single-phase inverters (converting DC to single-phase AC with a neutral wire), two-phase inverters (converting DC to two-phase AC), three-phase inverters (converting DC to three-phase AC), and/or three-phase plus neutral inverters (converting DC to three-phase AC with an additional neutral wire for mixed load systems where both three-phase and single-phase loads exist). The different types of inverters enable the described energy systems to be tailored to the specific power requirements and configurations of various applications, including residential, commercial, or industrial settings.

The skilled person understands that embodiments incorporating inverter modules configured as single-phase inverters will include a single output current and voltage, whereas embodiments incorporating inverter modules configured as higher-phase inverters will include two or more output currents with corresponding voltages. For the sake of simplicity, the present description has been primarily written with reference to a single current and voltage. However, it can be appreciated that any embodiments described with reference to a specific type of inverter configuration is also applicable to any other types of inverter configurations . The skilled person understands how the various inverter types may impact the system's overall configuration. Specifically, for single-phase inverters, the system can measure the output current(s) for the single phase and optionally ensure that the current returning through the neutral is accounted for. Conversely, for three-phase inverters, the system may measure the output currents for all three phases, ensuring that each phase's current is monitored to maintain balance and to calculate the target value across all phases. For three-phase inverters with a neutral connection, the system can operate similarly to three-phase inverters but with an additional consideration of the neutral current.

In specific embodiments, the master module can be configured to adapt the previously described target output current(s) to the specific technical requirements of each inverter type. However, it should be appreciated that the overall methodology as described herein, specifically by setting and adjusting to a target current, works the same for each inverter type. Specifically, for a single-phase system, the target output current(s) can include a single value that the inverter adjusts its output to match. Conversely, for a three-phase system, the target output current(s) can be a set of three-phase currents that collectively achieve the desired energy distribution. For example, the average current value can be calculated for each phase as set out previously. For mixed systems, a neutral current can be included to ensure that the system's operation remains within safe limits, balancing the overall current distribution.

Consequently, while the inverter configuration may impact the specifics of current measurement, balancing, and control, it does not fundamentally alter the concept of achieving an equal distribution of current(s) across the parallel inverters. Each inverter module will work within the system by adhering to the principle of adjusting its output current(s) to match the target current value, with appropriate adaptations for phase and neutral management. This ensures that the system remains versatile and functional across various inverter configurations.

As a result of the above, there is reduced requirement for a high-speed communication interface between the inverters and the master module, as the calibration process can operates at a slower pace. For example, units of 10kVA have been paralleled to validate the concept and test the system. This configuration is applicable to all inverter modules with islanding capacity, including combined inverters with grid connection and islanding capability. Furthermore, the inverter modules can autonomously regulate their output parameters. Should one inverter reach its limit or encounter a fault, the remaining inverter modules can automatically increase their output to compensate for the constrained or faulty inverter module.

In certain embodiment the communication interface between the master module and the plurality of local modules is a low-speed communication interface configured to operate at data transfer rates sufficient for transmitting the performance profiles data, without requiring high-speed data transmission capabilities. The low-speed communication interface can operate at relatively low data transfer rates, ranging from a few bits per second (bps) to a few megabits (Mbps) per second, for example 10 Mbps or 5 Mbps or 1 Mbps, preferably up to a few kilobits per second (kbps), for example 125 kbps. Examples of low-speed communication interface may include, but are not limited to, CANbus, RS422, RS-232 and RS-485, I2C (Inter-Integrated Circuit), Modbus, Zigbee and the like. The use of low-speed communication interface can ensure reliable and energy efficient communication between the master module and the local modules at reduced costs and complexity. The skilled person understands that while the use of a low-speed communication can be advantageous for the reasons set out above, the invention can also be realised using high-speed communication interfaces.

Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment.

As used herein, the terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited members, elements or method steps also include embodiments which "consist of" said recited members, elements or method steps. The singular forms "a", "an", and "the" include both singular and plural referents unless the context clearly dictates otherwise.

As used herein, relative terms, such as "left," "right," "front," "back," "top," "bottom," "over," "under," etc., are used for descriptive purposes and not necessarily for describing permanent relative positions. It is to be understood that such terms are interchangeable under appropriate circumstances and that the embodiment as described herein are capable of operation in other orientations than those illustrated or described herein unless the context clearly dictates otherwise.

Objects described herein as being "adjacent" to each other reflect a functional relationship between the described objects, that is, the term indicates the described objects must be adjacent in a way to perform a designated function which may be a direct (i.e. physical) or indirect (i.e. close to or near) contact, as appropriate for the context in which the phrase is used.

Objects described herein as being "connected" or "coupled" reflect a functional relationship between the described objects, that is, the terms indicate the described objects must be connected in a way to perform a designated function which may be a direct or indirect connection in an electrical or nonelectrical (i.e. physical) manner, as appropriate for the context in which the term is used.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical value or range endpoint by providing that a given value may be "a little above" or "a little below" said value or endpoint, depending on the specific context. Unless otherwise stated, use of the term "about" in accordance with a specific number or numerical range should also be understood to provide support for such numerical terms or range without the term "about". For example, the recitation of "about 30" should be construed as not only providing support for values a little above and a little below 30, but also for the actual numerical value of 30 as well.

The recitation of numerical ranges by endpoints includes all numbers and fractions subsumed within the respective ranges, as well as the recited endpoints. Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the disclosure described herein are capable of operation in other sequences than described or illustrated herein.

Reference in this specification may be made to devices, structures, systems, or methods that provide "improved" performance (e.g. increased or decreased results, depending on the context). It is to be understood that unless otherwise stated, such "improvement" is a measure of a benefit obtained based on a comparison to devices, structures, systems or methods in the prior art. Furthermore, it is to be understood that the degree of improved performance may vary between disclosed embodiments and that no equality or consistency in the amount, degree, or realization of improved performance is to be assumed as universally applicable.

In addition, embodiments of the present disclosure may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the present disclosure may be implemented in software (e.g., instructions stored on non-transitory computer-readable medium) executable by one or more processing units, such as a microprocessor and/or application specific integrated circuits. As such, it should be noted that a plurality of hardware and software-based devices, as well as a plurality of different structural components may be utilized to implement the technology of the present disclosure. For example, "servers" and "computing devices" described in the specification can include one or more processing units, one or more computer-readable medium modules, one or more input/output interfaces, and various connections connecting the components.

## Claims

1. A parallel inverter network management system (500) comprising:
- a plurality of inverter modules (510, 520) electrically connected in parallel through a power distribution network configured for transfer (502) of electrical energy to at least one load connected to the power distribution network;
- a master module (550) communicatively connected to the plurality of inverter modules;
- wherein each inverter module of the plurality of inverter modules is electrically connected (501) to at least one direct current source supplying a direct current, and the inverter module is configured to invert the supplied direct current into an alternating current, thereby forming an alternating current source supplying an alternating current to the power distribution network;
- wherein each inverter module is configured for locally adjusting its output current supplied to the power distribution network;
- wherein each inverter module is configured to measure its output current and communicate the measured output current to the master module;
- wherein the master module is configured to, upon receiving the plurality of measured output currents from the plurality of inverter modules, determine a target current value across the plurality of inverter modules, and transmit the target current value to the plurality of inverter modules; and,
- wherein each inverter module is configured to, upon receiving the target current value from the master module, adjust its output current to match the target current value.

2. The system according to claim 1, wherein the master module is configured to determine the target current value by calculating an average output current per inverter module, preferably by calculating a root mean square value, from the plurality of measured output currents received from the plurality of inverter modules.

3. The system according to any one of the preceding claims, wherein each inverter module is configured to determine an internal calibration value defined as is the difference between the target current value and its output current, and adjust its output current to match the target current value based on the internal calibration value.

4. The system according to claim 3, wherein each inverter module is configured to measure its output voltage and communicate the measured output voltage to the plurality of inverter modules; and wherein each inverter module is further configured to, upon receiving one or more measured output voltages from the other inverter modules, compare its measured voltage with the received voltage measurements, and optionally adjust its internal calibration value based on the comparison.

5. The system according to any one of the preceding claims, wherein the plurality of inverter modules are communicatively connected and configured to communicate the measured output current; wherein the plurality of inverter modules are further configured to reduce direct output current by summing the phase currents generated by each inverter module and adjusting them to collectively equal zero.

6. The system according to any one of the preceding claims, wherein each inverter module comprises an inverter stage (511, 512) configured to convert direct current to alternating current, and a filter (521, 522) configured to adjust the alternating output current; wherein the plurality of inverter modules are electrically coupled by connecting the filters of each inverter module.

7. The system according to any one of the preceding claims, wherein each inverter module further comprises a voltage sensor configured for measuring of voltage of the alternating current flowing across the power distribution.

8. The system according to any one of the preceding claims, wherein the inverter modules are configured as single-phase inverters, two-phase inverters, three-phase inverters, and/or three-phase plus neutral inverters.

9. The system according to any one of the preceding claims, further comprising a communication interface (560) comprising communicative pathways configured for data exchange between the master module and the plurality modules.

10. The system according to claim 9, wherein the communication interface is a low-speed communication interface configured to operate at data transfer rates sufficient for transmitting the measured output currents and the target current value, without requiring high-speed data transmission capabilities; preferably wherein the low-speed communication interface operates at data transfer rates ranging up to 10 megabits per second (Mbps), for example 5 Mbps or 1 Mbps, more preferably up to 125 kilobits per second (kbps).

11. The system according to any one of the preceding claims, wherein the electrical energy source comprises one or more photovoltaic systems, wind turbines, fuel cells, batteries, generators, and/or combined heat and power units.

12. The system according to any one of the preceding claims, wherein the load comprises one or more residential appliances, commercial appliances, industrial appliances, electric vehicles, heating and cooling systems, and/or public electricity grid connections.

13. A modular energy network (200) comprising a plurality of electrically connected parallel inverter network management systems (100) according to any one of claims 1 to 12.

14. Method for managing a parallel inverter network, comprising the steps of:
- providing a modular energy management system comprising a plurality of inverter modules electrically connected in parallel through a power distribution network configured for transfer of electrical energy to at least one load connected to the power distribution network, and a master module communicatively connected to a plurality of inverter modules; wherein each inverter module of the plurality of inverter modules is electrically connected to at least one direct current source supplying a direct current, and the inverter module is configured to invert the supplied direct current into an alternating current, thereby forming an alternating current source;
- measuring, by each inverter module, its output current and communicating the measured output current to the master module;
- determining, by the master module, upon receiving the measured output currents from the plurality of inverter modules, a target current value across the plurality of inverter modules, and transmitting the target current value to the plurality of inverter modules;
- adjusting, by each inverter module, upon receiving the target current value from the master module, its output current to match the target current value.

15. The method according to claim 14, further comprising the step of determining the target current value by the master module by calculating an average output current per inverter module, preferably by determining the root mean square from the measured output currents received from the plurality of inverter modules; and, further comprising the step of each inverter module determining an internal calibration value defined as the difference between the target current value and its output current, preferably the root mean square value, and adjusting its output current to match the target current value based on the internal calibration value.
